Europäisches Patentamt

European Patent Office

Office européen des brevets

(11) Numéro de publication: **0 205 388**

**B1**

(12) **FASCICULE DE BREVET EUROPÉEN**

(45) Date de publication du fascicule du brevet: 02.11.88

(21) Numéro de dépôt: **86401253.9**

(22) Date de dépôt: **10.06.86**

(51) Int. Cl.⁴: **F 16 D 23/14**

(54) Montage de butée de débrayage et procédé de mise en place et de démontage du montage de butée.

(30) Priorité: **12.06.85 FR 8508893**

(43) Date de publication de la demande: **17.12.86 Bulletin 86/51**

(45) Mention de la délivrance du brevet: **02.11.88 Bulletin 88/44**

(84) Etats contractants désignés: **DE GB IT**

(56) Documents cité: **FR-A-2 545 172**

(73) Titulaire: **VALEO, 64 Avenue de la Grande Armée, F-75017 Paris (FR)**

(72) Inventeur: **Gay, Christian, 36, rue Labat, F-75018 Paris (FR)**
Inventeur: **Lassiaz, Philippe, 19 rue Thiers, F-92100 Boulogne (FR)**

(74) Mandataire: **CABINET BONNET- THIRION, 95 Boulevard Beaumarchais, F-75003 Paris (FR)**

LIBER, STOCKHOLM 1988

## Description

La présente invention concerne, d'une manière générale, les butées de débrayage, notamment pour véhicule automobile.

Elle vise plus particulièrement celles de ces butées de débrayage qui, dites tirées, sont destinées à agir en traction sur le dispositif débrayeur de l'embrayage à commander, et qui, pour ce faire, doivent être attelées à celui-ci.

Il a été proposé, à cet effet, dans certains montages de butée de débrayage, et c'est le cas, notamment, dans le montage de butée de débrayage décrit dans la FR-A-2 545 172, de mettre en oeuvre, entre la butée de débrayage et le dispositif débrayeur à commander, une pièce, dite ici par simple commodité "pièce d'accostage", qui, convenablement rapportée sur ledit dispositif débrayeur, comporte radialement, du côté de celui-ci opposé à la butée de débrayage, une collerette d'appui par laquelle elle est apte à agir sur lui, en coopération avec des moyens de solidarisation en traction, qui, établis entre une pièce, dite ici par commodité "pièce d'attaque", appartenant à la butée de débrayage et une pièce dite par commodité "pièce d'accostage", sont propres à assurer une liaison axiale entre lesdites pièces.

En pratique, dans la demande de brevet français mentionnée ci-dessus, les moyens de solidarisation en traction mis en oeuvre sont d'une manière générale constitués par un organe de couplage élastiquement déformable radialement, qui est porté par l'une des pièces à solidariser en traction, et qui est destiné à coopérer en butée avec une portée d'entraînement ménagée globalement transversalement à cet effet sur l'autre de celles-ci.

Une telle disposition à notamment pour avantage de permettre d'équiper par avance de la pièce d'accostage le dispositif débrayeur de l'embrayage à commander, avant même le montage du mécanisme d'embrayage correspondant, et d'assurer ensuite, lors de l'assemblage de l'ensemble, la venue en prise par simple encliquetage de la butée de débrayage avec ladite pièce d'accostage.

Dans les formes de réalisation proposées dans la demande de brevet français mentionnée ci-dessus, l'organe de couplage est un jonc annulaire, dit ici par simple commodité "jonc de solidarisation", qui est au moins partiellement engagé radialement dans une gorge annulaire de retenue, ménagée pour lui sur l'une des pièces à solidariser en traction, l'autre de celles-ci comportant la portée d'entraînement avec laquelle il doit coopérer pour une telle solidarisation. Celui des flancs de la gorge de retenue, qui est axialement du côté opposé à la portée d'entraînement par rapport au jonc de solidarisation, est globalement oblique sur l'axe de l'ensemble en s'écartant de l'autre des flancs de ladite gorge de retenue.

Ainsi, lorsque, par sa pièce d'attaque, la butée de débrayage exerce une traction sur la pièce d'accostage, et, par l'intermédiaire de celle-ci, sur le dispositif débrayeur de l'embrayage à commander, le jonc de solidarisation intervenant axialement entre lesdites pièces se trouve systématiquement sollicité en direction de la portée d'entraînement avec laquelle il doit coopérer.

Selon la demande mentionnée ci-dessus, celle des pièces qui est munie de la portée d'entraînement comporte en regard du jonc de solidarisation, au moins un picot ménagé en saillie à l'opposé de la portée d'entraînement par rapport audit jonc de solidarisation, le picot présentant une surface dite d'éjection globalement oblique sur l'axe de l'ensemble, en s'écartant de la portée d'entraînement.

Le montage butée de débrayage-pièce d'accostage peut alors se faire de façon classique par simple clipsage. Au cours du démontage, il suffit de pousser, avec la pièce d'attaque de la butée, le jonc de solidarisation en direction des picots, la surface d'éjection de ces derniers, qui est globalement oblique sur l'axe de l'ensemble, obligeant alors le jonc à se rétracter à nouveau dans la gorge de retenue que présente, par exemple, la pièce d'attaque, le jonc de solidarisation étant apte à reprendre sa forme initiale dès que la poussée qu'il subit lui à fait "franchir" lesdits picots. Le jonc de solidarisation se retrouve ainsi du côté de la pièce d'accostage opposé à la butée de débrayage, par exemple, sur la collerette d'appui que présente cette pièce d'accostage. On peut alors retirer la butée, qui n'est plus en prise avec le jonc de solidarisation.

La demande mentionnée ci-dessus concerne également un procédé de mise en place d'un montage de butée dans lequel la pièce d'attaque de la butée est encliquetée dans la pièce d'accostage, avec une surcourse cet encliquetage comportant un mouvement d'engagement de la pièce d'attaque dans la pièce d'accostage, avec une limitation de la course d'engagement de la pièce d'attaque, due au positionnement d'une ou plusieurs cales entre la pièce d'accostage et le capot de la butée pour éviter un déclipsage de l'ensemble dû à l'éjection du jonc de solidarisation par ledit picot au cours du montage. Elle concerne également un procédé de démontage d'un montage de butée qui comporte la poussée du jonc de solidarisation au-delà dudit picot, la ou les cales ayant été otées à la fin de la mise en place de ce montage.

Une telle réalisation, bien que donnant satisfaction, outre le grand nombre de pièces qui la compose, nécessite de pratiquer une large ouverture dans le carter d'embrayage et de retirer les cales à la fin du montage.

La présente invention à pour objet de pallier cet inconvénient en supprimant l'emploi de cales tout en conservant une bonne précision des courses.

Plus particulièrement, la présente invention vise un montage de butée d'embrayage du genre comportant pour l'attelage d'une butée de débrayage au dispositif débrayeur d'un embrayage, une butée du genre comportant un élément d'attaque par lequel elle est adaptée à agir en traction sur un dispositif débrayeur de l'embrayage et un élément de manoeuvre par lequel elle est adaptée à être actionnée par un organe de commande, un capot muni d'un retour radial permettant l'attelage axial de cet élément de manoeuvre à cet élément d'attaque, une pièce d'accostage munie de doigts de retenue convenablement rapportée sur le dispositif débrayeur, des moyens de solidarisation en traction entre la pièce d'accostage et la pièce d'attaque de la butée, caractérisé en ce qu'il comprend des moyens de limitation de la course d'engagement de la pièce d'attaque dans la pièce d'accostage constitués par des plages d'appui axial solidaires de l'élément de manoeuvre de la butée, séparées angulairement et alternées avec des ouvertures et adaptées à former butée au regard de la pièce d'accostage.

De préférence, ces plages d'appui axial forment une collerette d'orientation globalement radiale.

Cette collerette globalement radiale permet, lors du montage, de poursuivre l'engagement de la pièce d'attaque dans la pièce d'accostage jusqu'à obtenir le contact entre la collerette et les doigts de retenue. Suivant une caractéristique, cette collerette est solidaire du capot et prolonge le retour radial de celui-ci pour former un repli annulaire.

L'épaisseur de ce repli joue le même rôle que les cales utilisées dans la demande citée précédemment et permet d'obtenir un bon montage de butée sans déclipsage de l'ensemble.

Suivant un autre aspect de l'invention, la collerette comporte des ouvertures qui, pour une orientation convenable de celle-ci, correspondent aux doigts de retenue tout en ayant une largeur supérieure à la largeur de ceux-ci.

Une simple rotation relative de la collerette par rapport au dispositif débrayeur, permet donc le passage de ces doigts de retenue dans ces ouvertures et ainsi un découplage de l'ensemble par poursuite de l'engagement de la pièce d'attaque dans la pièce d'accostage au-delà d'une position donnée. Par exemple, les doigts de retenue étant en appui contre la collerette, il suffit de faire tourner la butée et donc l'élément de manoeuvre, pour permettre le passage des doigts de retenue dans les ouvertures de la collerette.

On notera la faible probabilité pour qu'une ouverture tombe en face d'un doigt de retenue hors du montage. Cet inconvénient peut être évité par l'opérateur qui peut visuellement positionner la butée pour que cela ne se produise pas, cela d'autant plus facilement si l'on remarque qu'en tournant la butée de 180°, les doigts de retenue et les ouvertures étant positionnés à 120°, on aura presque systématiquement des parties pleines de la collerette vis-à-vis des doigts de retenue.

Par rapport au montage décrit dans la demande citée précédemment, l'invention présente l'avantage important de ne pas nécessiter, à la fin du montage, d'opération d'extraction de cales par une ouverture du carter d'embrayage, opération qui est difficile à réaliser.

Ainsi, le désaccouplement pièce d'accostage-butée peut se faire sans déboulonnage du mécanisme d'embrayage du plateau de réaction et sans utilisation d'un outil spécialisé venant rétracter le jonc de solidarisation.

Ainsi, il est possible de monter l'ensemble butée-pièce d'accostage et de le démonter par rotation relative de la collerette par rapport aux doigts de retenue. Cette solution ne fait appel qu'à une modification du capot réalisée par simple emboutissage.

Les caractéristiques et avantages de l'invention ressortiront d'ailleurs de la description qui va suivre, à titre d'exemple, en référence aux dessins schématiques annexés sur lesquels:

- la figure 1 est une vue en élévation, d'une butée de débrayage suivant l'invention, pour sa position angulaire de service;
- la figure 2 en est, avec un arrachement, une vue en plan, suivant la flèche II de la figure 1;
- la figure 3 en est une vue de côté, suivant la flèche III de la figure 1;
- la figure 4 est une vue en perspective du capot mis en oeuvre dans cette butée de débrayage, représentée isolément;
- la figure 5 est une vue en élévation d'un diaphragme d'embrayage à l'arrière duquel est engagée une pièce d'accostage munie de doigts de retenue;
- les figures 6 et 7 sont des vues agrandies d'une partie de la figure 3; la figure 6 illustre l'engagement de la butée de débrayage avec la pièce d'accostage prévue à cet effet sur le dispositif débrayeur concerné, lors de l'assemblage de l'ensemble; la figure 7 illustre le désaccouplement du montage de butée.

Dans le mode de réalisation choisi et représenté, à titre d'exemple, aux figures, l'invention est appliquée à un montage de butée du type décrit dans la FR-A-2 545 172 mentionnée plus haut.

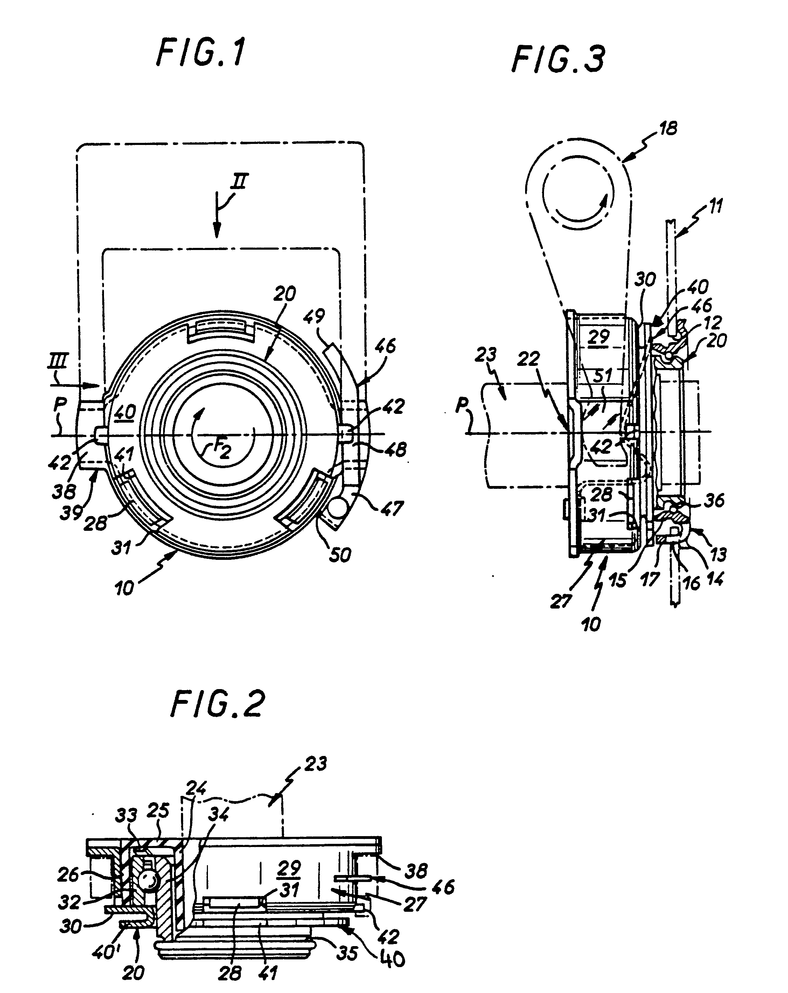

Tel qu'il apparaît aux figures 1, 2 et 3, et de manière connue en soi la butée de débrayage 10 comporte, globalement, un élément d'attaque 20, par lequel elle est adaptée à agir sur un dispositif débrayeur 11, par l'intermédiaire d'une pièce d'accostage 13, tel que détaillé ci-après, un élément de manoeuvre 22, par lequel elle est destinée à être montée coulissante axialement sur un quelconque organe de guidage 23, par exemple une trompette et par lequel elle est par ailleurs, adaptée à être actionnée par un organe de commande 18 constitué par exemple, tel que schématisé en traits interrompus sur les figures 1, 3, par une fourchette de débrayage, et des moyens d'attelage assujettissant axialement ledit élément d'attaque 20 audit élément de manoeuvre 22 tout en autorisant une libre rotation relative.

De manière également connue en soi, l'élément de manoeuvre 22 de la butée 10 comporte un manchon 24 par lequel il est engagé à coulissement sur l'organe de guidage 23, un flasque annulaire 25, qui s'étend transversalement par rapport à l'axe de l'ensemble à l'une des extrémités dudit manchon 24, et, à la périphérie externe de ce flasque annulaire 25, un rebord axial 26, qui, coaxial au manchon 24, s'étend annulairement autour de celui-ci, dans le même sens axial que ce manchon 24, et dans lequel sont formées, de place en place, pour l'encliquetage d'un capot 27, des pattes élastiquement déformables 28.

Le capot 27, corollairement, comprend, d'une part, annulairement autour de l'axe de l'ensemble, une jupe 29, par laquelle il est engagé sur le rebord axial 26 de l'élément de manoeuvre 22, et, d'autre part, transversalement par rapport audit axe, à l'extrémité de la jupe 29 opposée au flasque annulaire 25 de l'élément de manoeuvre 22, un bord tombé 30, qui s'étend radialement en direction de cet axe.

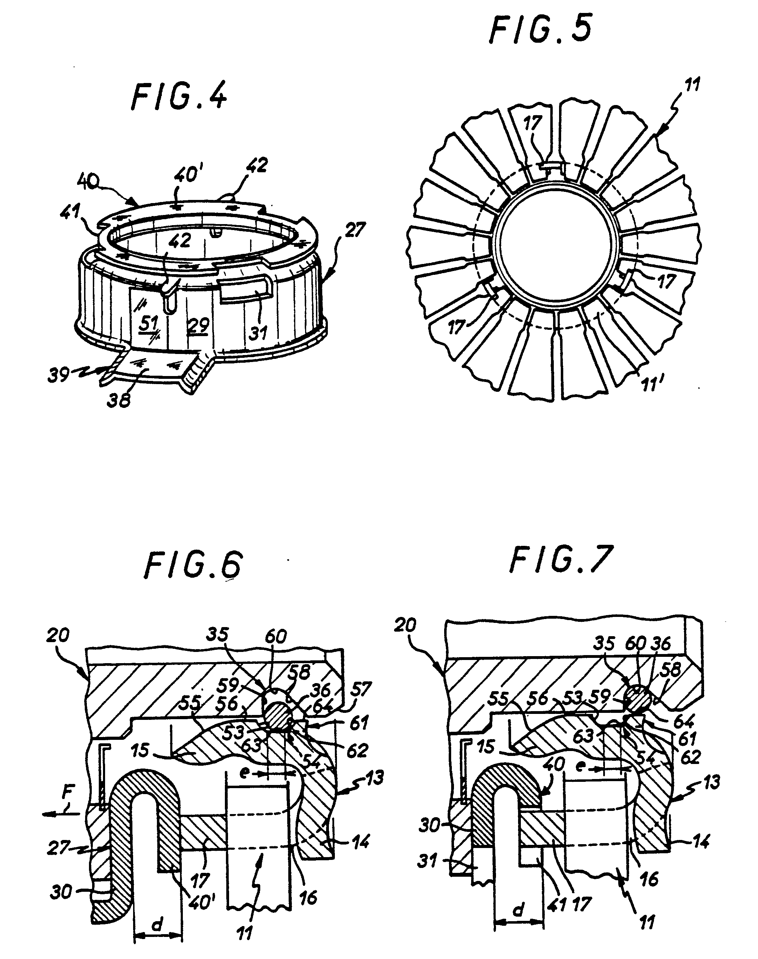

Selon une caractéristique essentielle de l'invention, comme représenté notamment aux figures 2 à 4, le capot 27 comporte des plages 40' d'appui axial séparées angulairement et alternées avec des ouvertures 41 dont le rôle apparaîtra ultérieurement dans la description en regard des figures 6 et 7.

Plus particulièrement, ces plages d'appui 40' forment une collerette 40 d'orientation globalement radiale prolongeant le retour radial 30 formant un bord tombé du capot 27 dotée de ces ouvertures 41.

La largeur circonférentielle de ces ouvertures 41 est supérieure à la largeur circonférentielle de doigts 17 de retenue que présente la pièce d'accostage 13.

Dans la jupe 29 sont formées, de place en place, des fenêtres 31, sur la tranche transversale desquelles se crochettent lesdites pattes axiales 28, cependant que la partie courante dudit rebord axial 26 de l'élément de manoeuvre 22 prend appui, par sa tranche d'extrémité, sur ledit bord tombé 30 du capot 27, rendant ainsi celui-ci solidaire de l'élément de manoeuvre 22.

L'élément d'attaque 20 est formé, dans la forme de réalisation représentée, par un roulement à billes, dont la bague externe 32, sous la sollicitation d'une rondelle élastique à action axiale 33 prenant appui sur le flasque annulaire 25 de l'élément de manoeuvre 22, porte par sa tranche opposée sur le bord tombé 30 du capot 27, et dont la bague interne 34 est adaptée, par une gorge 35, à coopérer avec un jonc élastique 36, ladite bague interne 34 faisant axialement saillie à cet effet hors du capot 27 à la faveur de l'ouverture centrale dudit bord tombé 30 de celui-ci.

Pour l'action de la fourchette de débrayage 18 la butée de débrayage 10 suivant l'invention comporte, en positions globalement diamétralement opposées l'une par rapport à l'autre, deux facettes transversales d'appui 38, qui appartiennent chacune à une patte 39 qui est d'un seul tenant avec le capot 27, en s'étendant transversalement, en direction opposée à l'axe de l'ensemble, à compter de l'extrémité de la jupe 29 de celui-ci opposée à son bord tombé 30.

C'est donc par l'intermédiaire du capot 27 que l'élément de manoeuvre 22 est, dans ce cas, adapté à être soumis à la fourchette de débrayage 18.

Pour l'action de la fourchette de débrayage 18, la butée de débrayage 10 comporte, en outre, deux facettes axiales de guidage 51, qui, parallèles l'une à l'autre, s'étendent globalement axialement, et qui, par rapport au plan axial P de l'ensemble qui leur est sensiblement perpendiculaire, sont disposées de part et d'autre dudit plan P.

Ces facettes axiales de guidage 51 ont pour fonction de coopérer en contact avec les faces latérales des doigts de la fourchette de débrayage 18, pour un maintien en rotation autour de son axe de la butée de débrayage 10.

La butée 10 comporte en outre des moyens élastiques qui permettent de solliciter en permanence l'organe de commande vers les facettes transversales d'appui 38.

Ces moyens élastiques comportent une lamelle de ressort 46 qui comprend un premier tronçon 47 par lequel elle est supportée sur une patte radiale 50 de la butée, un deuxième tronçon 48 par lequel elle s'étend globalement parallèlement à une facette transversale d'appui et un troisième tronçon 49 qui en forme l'extrémité libre.

Le deuxième tronçon 48 de la lamelle de ressort 46 a, vu de côté, figure 3, une configuration générale en forme de S pour appui sur une des faces transversales du doigt de cette fourchette 18 correspondant à la facette d'appui 38 concernée.

De manière connue en soi et dans une forme de mise en oeuvre plus particulièrement représentée à la figure 5, le dispositif débrayeur 11 est formé par l'extrémité 11' des doigts radiaux d'un diaphragme. Pour l'attelage de la butée de débrayage 10 au dispositif débrayeur 11 nécessaire à une action en traction de cette butée de débrayage 10 sur ce dispositif débrayeur 11, la pièce d'accostage 13 est rapportée sur ce dernier à la faveur de l'ouverture centrale 12.

Dans la forme de réalisation représentée, plus particulièrement à la figure 3, cette pièce d'accostage, est du type de celle décrite dans la FR-A-2 545 172. Du côté du dispositif débrayeur 11 opposé à la butée de débrayage 10, elle comporte radialement une collerette 14, dite collerette d'appui, pour action sur un tel dispositif débrayeur 11. Cette collerette d'appui est convenablement profilée à cet effet, et, d'un seul tenant avec elle-même, elle comporte une douille 15, qui, s'étendant globalement axialement, traverse le dispositif débrayeur 11, à la faveur de l'ouverture centrale 12 de celui-ci; à l'extrémité de cette collerette, du côté de la butée de débrayage 10, font axialement saillie de place en place, des pattes 16 portant circonférentiellement, en porte-à-faux, parallèlement à la collerette d'appui 14, les doigts de retenue 17 propres à assurer, en coopération avec cette collerette d'appui 14, le maintien axial de l'ensemble sur le dispositif débrayeur 11.

De manière connue en soi, entre la pièce d'attaque 20 de la butée de débrayage 10, d'une part, et la pièce d'accostage 13 portée par le dispositif débrayeur 11, d'autre part, sont établis des moyens de solidarisation en traction propre à assurer une liaison axiale entre ces deux pièces 20, 13.

Ces moyens de solidarisation sont plus particulièrement représentés à la figure 6.

La pièce d'attaque 20 est engagée dans la douille 15 de la pièce d'accostage 13, en sorte que ces moyens de solidarisation en traction interviennent entre la surface externe de la pièce d'attaque 20 et la surface interne de cette douille 15.

D'une manière connue en soi, ils comportent, d'une part, un jonc annulaire 36, élastiquement déformable radialement, dit de solidarisation qui est au moins partiellement engagé dans une gorge annulaire de retenue 35, ménagée sur la pièce d'attaque et d'autre part, une portée d'entraînement 53 tournée du côté de la collerette d'appui 14 de la pièce d'accostage 13 et qui est ménagée globalement transversalement sur la douille 15 de la pièce d'accostage 13.

Dans la forme de réalisation représentée, la portée d'entraînement 53 est une portée torique qui fait suite à une portée 54 globalement cylindrique de la douille 15 de la pièce d'accostage 13: Elle est disposée en bout de cette portée cylindrique 54 et se raccorde tangentiellement à celle-ci.

Du côté de la butée de débrayage 10, la douille 15 de la pièce d'accostage 13 forme, par l'extrémité de sa surface interne, une portée tronconique d'engagement 55 dont la concavité est tournée vers ladite butée de débrayage 10.

De même, la pièce d'attaque 20 de la butée de débrayage 10 présente, à son extrémité libre, une portée tronconique d'engagement 57.

Dans le type de montage de butée représenté à la figure 6, celui, 58, des flancs de la gorge de retenue 35 qui est axialement du côté opposé à la portée d'entraînement 53 de la pièce d'accostage 13 par rapport au jonc de solidarisation 36 est globalement oblique sur l'axe de l'ensemble, en s'écartant de l'autre, 59, des flancs de cette gorge de retenue 35 en s'éloignant dudit axe.

Le fond 60 de la gorge de retenue 35 a, par ailleurs, en section, un profil courbe complémentaire de celui du jonc de solidarisation 36; son flanc oblique 58 s'y raccorde tangentiellement et son autre flanc 59 est droit.

La pièce d'accostage 13 comporte, en outre, en regard du jonc de solidarisation 36 au moins un picot d'éjection 61 ménagé en saillie à l'opposé de la portée d'entraînement 53 par rapport à ce jonc de solidarisation 36, chaque picot 61 présentant une surface d'éjection 62 globalement oblique sur l'axe de l'ensemble en s'écartant de la portée d'entraînement 53. Un espace axial est laissé entre le raccord de la surface d'éjection 62 et celui de la portée d'entraînement 53 sur la portée cylindrique 54 de la douille 15.

Chaque picot 61 comporte une surface horizontale 64 dite de maintien.

L'attelage de la butée de débrayage 10 du dispositif débrayeur 11, c'est-à-dire la mise en place du montage de butée représentée sur les figures et le désaccouplement des éléments de ce montage vont maintenant être décrits à l'appui des figures 6 et 7.

La pièce d'accostage 13 étant en place sur le dispositif débrayeur 11, le jonc de solidarisation 36 est par avance positionné sur la butée de débrayage 10 et plus précisément sur la pièce d'attaque 20 de celle-ci, dans la gorge de retenue prévue à cet effet.

Il est alors procédé à un rapprochement axial de la butée de débrayage 10 et de la pièce d'accostage 13, avec engagement de la pièce d'attaque 20 de cette butée de débrayage dans la douille 15 de cette pièce d'accostage.

Ce rapprochement axial est effectué par coopération des doigts de la fourchette 18 avec des pattes 42 prévues à cet effet sur le capot 27 au niveau du bord tombé 30.

Du fait de la portée tronconique d'engagement 55 de la pièce d'accostage 13, le jonc de solidarisation 36 se trouve refoulé dans la gorge de retenue 35 de la pièce d'attaque 20 de la butée de débrayage 10.

Arrivée au droit de la portée d'entraînement 53 de la pièce d'accostage 13, il se déploie élastiquement à nouveau et vient ainsi en prise avec ladite portée d'entraînement.

Un moyen de limitation du mouvement d'engagement de la pièce d'attaque 20 dans la pièce d'accostage 13 permet au jonc de solidarisation de se déployer à nouveau tout en assurant l'encliquetage de manière sure.

Suivant l'invention, ce moyen est constitué par les plages d'appui axial 40' de la collerette 40 solidaire de l'élément de manoeuvre 22 d'orientation globalement radiale, propre à coopérer avec les doigts de retenue 17 de la pièce d'accostage 13 et dotée des ouvertures 41 pour le passage desdits doigts 17.

Ainsi, lors de la mise en place du montage de butée, illustrée à la figure 6, la butée est orientée de telle sorte que, lors du mouvement d'engagement de la pièce attaque 20 de cette butée dans la douille 15 de la pièce accostage 13, les doigts de retenue 17 viennent en appui sur les plages d'appui 40' de la collerette 40.

Cette collerette 40 forme un repli annulaire, d'épaisseur d, par rapport au retour radial 30 du capot 27 qui limite ce mouvement d'engagement de telle sorte que le jonc de solidarisation 36 ne soit pas poussé au-delà du raccord 63 entre la surface 62 d'éjection et la portée cylindrique 54 de la pièce d'accostage 13 afin d'éviter que les picots ne jouent leur rôle, et que le jonc 36 ne soit éjecté. On notera également que le bord 30 du capot 27 protège le roulement.

Ce repli annulaire permet ainsi de poursuivre, au cours du montage, le mouvement d'engagement de la butée 10 suffisamment loin pour assurer un déploiement correct du jonc de solidarisation 36.

La liaison axiale entre la pièce d'attaque 20 de la butée 10 et la pièce d'accostage 13 est ainsi réalisée de manière sure.

On remarquera sur la figure 7 que la collerette 40 est en appui contre les doigts de retenue 17 de la pièce d'accostage grâce à un déplacement du capot 27 par appui de la fourchette 18 sur les doigts 42.

Aussi, pour réaliser le désaccouplement illustré à la figure 7, de la butée de débrayage 10 et de la pièce d'accostage 13 solidaire du dispositif débrayeur 11, il suffit alors de faire tourner l'élément de manoeuvre jusqu'à réaliser la mise en coïncidence des ouvertures 41 de cette collerette 40 et des doigts de retenue 17.

Le mouvement d'engagement de la pièce d'attaque 20 dans la douille 15 de la pièce d'accostage 13 est, alors, poursuivi. Le désaccouplement est obtenu par poussée axiale du jonc de solidarisation 36, dans une direction opposée à celle matérialisée par la flèche F, par l'action du flanc droit 59 de la gorge de retenue 35 que comporte la pièce d'attaque 20 combinée avec celle des picots 61.

Comme représenté à la figure 7, le jonc de solidarisation 36 se trouve alors refoulé vers le fond de la gorge de retenue 35 tant que dure son déplacement le long de la surface de maintien 64.

Dès que cette surface est dépassée, le jonc de solidarisation reprend sa forme initiale. Il se trouve alors libre de s'échapper vers l'extérieur de la pièce d'attaque 20 de la butée 10.

On peut alors, retirer simplement la butée 10 en exerçant une action de traction sur la butée de débrayage 10 dans le sens matérialisé par la flèche F et récupérer le jonc de solidarisation 36.

Bien entendu, la collerette 40 avec ses plaques d'appui axial 40' peut être rapportée par clipsage sur le capot 27.

De même, elle peut être solidarisée par exemple par soudage par ultrason, avec les pattes 28 de l'élément de manoeuvre.

Bien entendu, l'invention ne se limite pas aux formes de réalisation décrites ou représentées, mais englobe toutes variantes d'exécution et/ou de réalisation.

En particulier, dans le mode de réalisation représenté aux figures 1 à 7, les ouvertures 41 de la collerette 40, sont avantageusement situées en face des fenêtres 31 du boîtier 27, et ont une même largeur que celles-ci, il ne s'agit pas là d'une caractéristique nécessaire de l'invention.

**Revendications**

1. Montage de butée de débrayage du genre comportant pour l'attelage d'une butée de débrayage au dispositif débrayeur d'un embrayage, une butée (10) du genre comportant un élément d'attaque (20), par lequel elle est adaptée à agir en traction sur un dispositif débrayeur (11) de l'embrayage et un élément de manoeuvre (22) par lequel elle est adaptée à être actionnée par un organe de commande (18), un capot (27) muni d'un retour radial (30) permettant l'attelage axial de cet élément de manoeuvre (22) à cet élément d'attaque (20), une pièce d'accostage (13) munie de doigts de retenue (17), convenablement rapportée sur le dispositif débrayeur (11), des moyens de solidarisation (36) en traction entre la pièce d'accostage (13) et la pièce d'attaque (20) de la butée, caractérisé en ce qu'il comprend des moyens de limitation de la course d'engagement de la pièce d'attaque (20) dans la pièce d'accostage (13) solidaires de l'élément de manoeuvre de la butée (22) constitués par des plages (40') d'appui axial séparées angulairement, alternées avec des ouvertures (41) et adaptées à former butée au regard de la pièce d'accostage (13).

2. Montage de butée de débrayage selon la revendication 1, caractérisé en ce que lesdites plages axiales forment une collerette (40) d'orientation globalement radiale.

3. Montage de butée de débrayage selon la revendication 2, caractérisé en ce que ladite collerette prolonge le retour (30) radial du capot (27), propre à coopérer avec les doigts de retenue (17) de la pièce d'accostage (13), cette collerette (40) étant dotée d'ouvertures (41) qui, pour une orientation angulaire dite de désaccouplement de la butée (10) par rapport à la pièce d'accostage (13) permettent le passage desdits doigts de retenue ( 17).

4. Montage de butée selon la revendication 3, caractérisé en ce que la largeur des ouvertures de la collerette est à peine supérieure à la largeur circonférentielle des doigts de retenue (17) de la pièce d'accostage (13).

**Patentansprüche**

1. Kupplungsausrücklageranordnung der Art, die zum Ankuppeln eines Kupplungsausrücklagers an die Ausrückvorrichtung einer Kupplung folgendes umfaßt: ein Ausrücklager (10) der Ausführungsart, die ein Eingriffselement (20) enthält, wodurch das Lager sich zur Ausübung einer Zugkraft auf die Ausrückvorrichtung (11) der Kupplung eignet, und weiterhin ein Betätigungselement (22), mit dessen Hilfe sich das Lager durch ein Bedienungsorgan (18) betätigen läßt, eine Kappé (27) mit Radialrücklauf (30) zur axialen Ankupplung dieses Betätigungselementes (22) an dieses Eingriffselement (20), ein Kopplungsstück (13) mit Haltefingern (17), auf geeignete Weise an der Ausrückvorrichtung (11) angebracht, Verbindungselemente (36) zur Ausübung einer Zugkraft zwischen dem Kopplungsstück (13) und dem Eingriffselement (20) des Lagers, dadurch gekennzeichnet, daß Vorrichtungen zur Begrenzung des Einrückhubes des Eingriffselementes (20) im Kopplungsstück (13) aus einem Stück mit dem Betätigungselement für das Lager (22) vorhanden sind, die aus winklig voneinander getrennten axialen Stützbereichen (40') bestehen, welche sich mit Öffnungen (41) abwechseln und geeignet sind, im Verhältnis zum Kopplungsstück (13) ein Ausrücklager zu bilden.

2. Kupplungsausrücklageranordnung gemäß Anspruch 1, dadurch gekennzeichnet, daß die erwähnten axialen Bereiche einen im wesentlichen radialen Ausrichtungsflansch (40) bilden.

3. Kupplungsausrücklageranordnung gemäß Anspruch 2, dadurch gekennzeichnet, daß der erwähnte Flansch den Radialrücklauf (30) der Kappe (27) verlängert, so daß ein Zusammenwirken mit den Haltefingern (17) des Kopplungsstückes (13) möglich wird, wobei dieser Flansch (40) mit Öffnungen (41) versehen ist, die zur winkligen, sogenannten Ausrichtungsabkopplung des Lagers (10) im Verhältnis zum Kopplungsstück (13) den Durchtritt der erwähnten Haltefinger (17) gestatten.

4. Kupplungsausrücklageranordnung gemäß Anspruch 3, dadurch gekennzeichnet, daß die Breite der Öffnungen des Flansches kaum größer ist als die Umfangsbreite der Haltefinger (17) des Kopplungsstückes (13).

**Claims**

1. A clutch release bearing assembly of the kind comprising, to couple a clutch release bearing to the clutch release device of a clutch, a release bearing (10) of the kind comprising a drive element (20), through which it is adapted to apply traction to a clutch release device (11), and an operating element (22), through which it is adapted to be acted upon by a control member (18), a cover (27) equipped with a radial lip (30) enabling the axial coupling of this operating element (22) to this drive element (20), a coupling piece (13) equipped with retaining fingers (17), suitably joined onto the clutch release device (11), and means (36) between the coupling piece (13) and the drive element (20) to fix them together in traction, characterized in that it comprises means, fixed to the operating element (22) of the clutch, for limiting the extent of insertion of the drive element (20) in the coupling piece (13) which are constituted by angularly separated axial bearing lands (40'), alternating with openings (41) and adapted to form abutments facing the coupling piece (13).

2. A clutch release bearing assembly according to claim 1, characterized in that the said axial bearing lands form a flange (40) directed generally radially.

3. A clutch release bearing assembly according to claim 2, characterized in that the said flange (40) is an extension of the radial lip (30) of the cover (27) suitable to cooperate with the retaining fingers (17) of the coupling piece (13), this flange (40) being provided with openings (41) which, in an angular orientation, termed decoupled, of the release bearing (10) relative to the coupling piece (13), permit the said retaining fingers (17) to pass through.

4. A clutch release bearing assembly according to claim 3, characterized in that the width of the openings of the flange is only slightly greater than the circumferential width of the retaining fingers (17) of the coupling piece (13).

# FIG.1

# FIG.3

# FIG.2

# FIG.4

# FIG.5

# FIG.6

# FIG.7